Europäisches Patentamt

European Patent Office

Office européen des brevets

(11) Publication number: **0 108 647**
**B1**

(12)　EUROPEAN PATENT SPECIFICATION

(45) Date of publication of patent specification: **10.05.89**

(51) Int. Cl.⁴: **G 06 F 9/38**

(21) Application number: **83306800.0**

(22) Date of filing: **08.11.83**

(54) Data processing apparatus.

(30) Priority: **08.11.82 JP 194558/82**

(43) Date of publication of application:
**16.05.84 Bulletin 84/20**

(45) Publication of the grant of the patent:
**10.05.89 Bulletin 89/19**

(84) Designated Contracting States:
**DE FR GB**

(56) References cited:
**DE-A-1 424 747**
**WESCON CONFERENCE RECORD, vol. 24,**
**16th-18th September 1980, pages (23/3) 1-8,**
**Anaheim, California, US; D. BURSKY:**
**"Enhancing CPU performance: slave, co-**
**processor, smart i/o alternatives"**
**ELECTRO/80 CONFERENCE RECORD, vol. 5,**
**13th-15th May 1980, pages(14/5) 1-8, Boston,**
**MA, US; C. McMINN: "The Intel 8087: a**
**numeric data processor"**
**WESCON CONFERENCE RECORD, vol. 25,**
**September 1981, pages (31/5) 1-10, El**
**Sequndo, US; J.L. WISE et al.: "Color graphics**
**with an advanced LSI controller"**

(73) Proprietor: **FUJITSU LIMITED**
**1015, Kamikodanaka Nakahara-ku**
**Kawasaki-shi Kanagawa 211 (JP)**
(73) Proprietor: **FUJITSU MICROCOMPUTER**
**SYSTEMS LIMITED**
**1015, Kamikodanaka Nakahara-ku**
**Kawasaki-shi Kanagawa-ken 211 (JP)**

(72) Inventor: **Mori, Shosuke**
**1-1, Soshigaya 2-chome Setagaya-ku**
**Tokyo 157 (JP)**
Inventor: **Agawa, Makoto**
**2-2-2-1102, Konandai Konan-ku**
**Yokohama-shi Kanagawa 233 (JP)**
Inventor: **Fujisaku, Kiminori**
**474-59-405, Hirao**
**Inagi-shi Tokyo 206 (JP)**
Inventor: **Yamauchi, Mitsuru**
**1371, Oomaru**
**Inagi-shi Tokyo 206 (JP)**
Inventor: **Ono, Hitoshi**
**Dai 3 Kaburagi-so 203 1174-7, Ichigao-cho**
**Midori-ku Yokohama-shi Kanawaga 227 (JP)**

(74) Representative: **Fane, Christopher Robin King**
**et al**
**HASELTINE LAKE & CO. Hazlitt House**
**28 Southampton Buildings Chancery Lane**
**London, WC2A 1AT (GB)**

Courier Press, Leamington Spa, England.

## Description

The present invention relates to data processing apparatus.

Most basic instructions in a microcomputer system or a personal computer system, especially in a computer of a cathode ray tube (CRT) graphic display system, cause the computer to execute an arithmetic operation (logic operation) on data stored in a random access memory (RAM) and data fed from a central processing unit (CPU) and to store the results of the arithmetic operation in the RAM. If such arithmetic operations are performed by software, the load of the CPU becomes extremely heavy when the number of instructions causing the computer to execute arithmetic operations increases. Also, it is very difficult to speed up arithmetic operations if performed by software.

Furthermore, in such a software based system, special arithmetic operation instructions not prepared in advance in an instruction set cannot be easily executed at a high speed.

It is therefore desirable to provide data processing apparatus which can reduce the load of its CPU and perform high-speed arithmetic operations.

An article in Wescon Conference Record Vol. 25, September 1981, pages (31/5) 1—10, El Segundo, U.S.A., entitled "Color Graphics with an Advanced LSI Controller", discloses a graphics display controller for performing graphics processing such as drawing of lines, arcs, and rectangles, for use with a colour CRT terminal or the like. The graphics display controller can form part of data processing apparatus having a central processing unit, a data bus coupled to the central processing unit, and a memory coupled to the data bus, for storing data fed from the central processing unit via the data bus, the central processing unit being operable to supply an address to the memory for use in reading data from, and writing data in, the memory.

According to the present invention, there is provided a data processing apparatus comprising:

a central processing unit;

a data bus coupled to said central processing unit;

memory means, coupled to said data bus, for storing data from said central processing unit via said data bus; said central processing unit being operable to supply an address to said memory means for use in reading data from and writing data in said memory means;

characterised by:

means, coupled to said data bus, for identifying a predetermined instruction code being one of a plurality of instruction codes requiring said central processing unit to read data from or to write data in said memory means; and

logic operation means, coupled to said data bus, for receiving data from said memory means via said data bus, for executing a logic operaton with respect to said received data to produce data, and for writing said produced data in said memory means, when said predetermined instruction code is identified, said logic operation means being operable to perform said receiving, executing and writing within a single instruction cycle of said central processing unit and without interrupting operation of said central processing unit.

An embodiment of the present invention may provide logic operation means which performs the receiving to writing operations while the CPU is executing an operation corresponding to the predetermined instruction code.

In embodiments of the present invention, the logic operation means executes a logic operation (arithmetic operation) on data stored in a memory and writes the results of the operation in the memory instead of data from the CPU, when a predetermined instruction code is identified. This can allow a high-speed logic operation and reduce the CPU load. The CPU operates during the above logic operation and one logic operation is performed within one instruction cycle of the CPU. If the CPU were to stop (wait) its processing during the operation of the logic operation means, considerable hardware for producing read/write timing and addresses would be necessary.

Since a high-speed logic operation can be performed, the graphic display speed can be increased, even in the case of a special instruction not prepared in advance in the instruction set.

Reference is made, by way of example, to the accomapnying drawings in which:

Figure 1 (separated into Fig. 1A and Fig. 1B) is a block diagram of an embodiment of the present invention;

Fig. 2 is a block diagram of a logic operation circuit in Fig. 1;

Fig. 3 is a diagram for illustrating the operation of the logic operation circuit in Fig. 2;

Fig. 4 is a time chart of the embodiment in Fig. 1; and

Fig. 5 (separated into Fig. 5A and Fig. 5B) is a block diagram of another embodiment of the present invention.

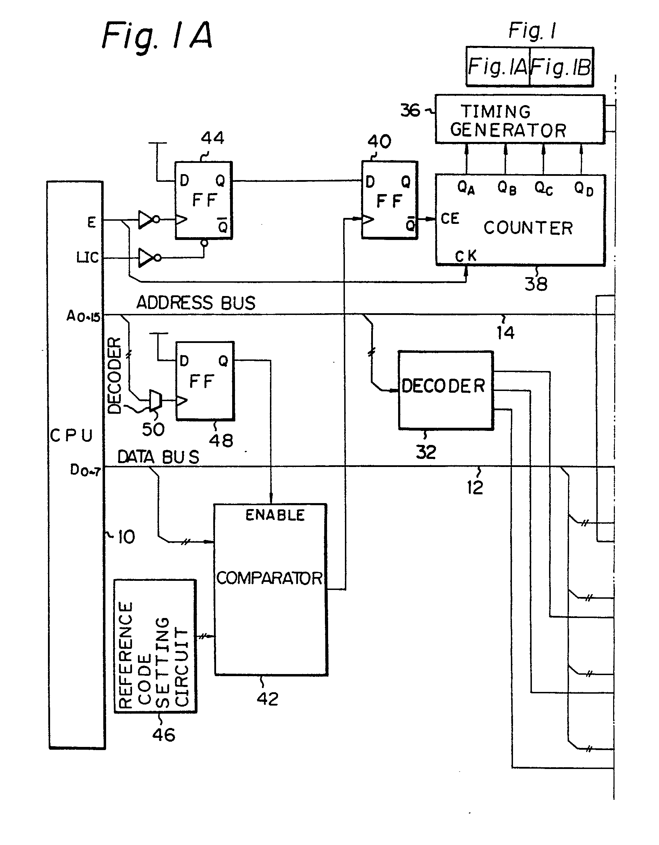

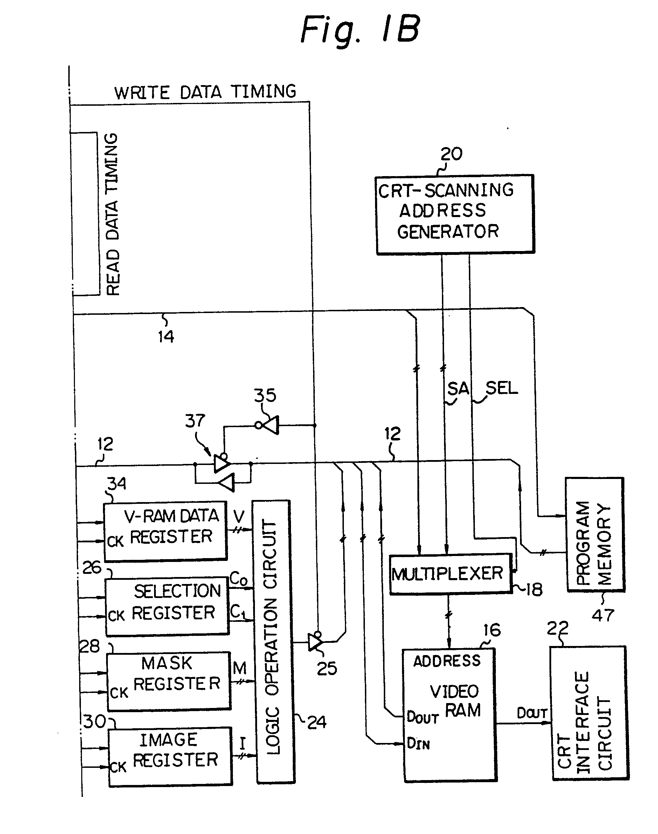

Referring to Fig. 1, reference numeral 10 denotes a CPU, 12 a data bus coupled to the CPU 10, 14 an address bus coupled to the CPU 10, and 16 a video RAM coupled to the data bus 12. A multiplexer 18 selects and feeds either a scanning address SA fed from a CRT-scanning address generator 20 or an address fed from the CPU 10 via the address bus 14 to the video RAM 16, in response to a selected signal SEL. Data stored in the video RAM 16 is read and fed to a CRT interface circuit 22 in response to the scanning address SA fed from the CRT-scanning address generator 20 via the multiplexer 18. The data stored in the video RAM 16 is also read and fed to the data bus 12, and data fed from the CPU 10 via the data bus 12 is written in the video RAM 16, in response to the address fed from the CPU 10 via the address bus 14 and the multiplexer 18.

A logic operation circuit 24 executes one of various arithmetic operations (logic operations) with respect to the data stored in the video RAM 16 and image data fed from the CPU 10. The results of the executed arithmetic operation are written again into the video RAM 16 via a buffer 25 and the data bus 12. The detailed constitution of the logic operation circuit 24 will be described later.

A selection register 26 holds two-bit selection data $C_0$ and $C_1$ which indicate what kind of arithmetic (logic) operation should be executed. Since, in this case, the selection data are two-bits, one of four arithmetic operations is selected. A mask register 28 holds eight-bit mask data M which instruct whether to execute a masking operation for maintaining data stored in the video RAM 16 without change. An image register 30 holds eight-bit image data I which are fed from the CPU 10. Each of the selection data $C_0$ and $C_1$, the mask data M, and the image data I are held when a decoder 32 decodes an address corresponding to each of the registers 26, 28, and 30. Namely, each of the registers 26, 28, and 30 is assigned a respective address, and the decoder 32 decodes one of three addresses corresponding to the above registers.

A V-RAM data register 34 holds video RAM data V read from the video RAM 16. When a read data timing signal is applied from a timing generator 36, the V-RAM data register 34 obtains the video RAM data V from the data bus 12 and holds it.

The timing generator 36 also produces a write data timing signal. When the write data timing signal is applied to the buffer 25, the buffer 25 opens, causing the results of the arithmetic operation in the logic operation circuit 24 to be transmitted to the video RAM 16 via the data bus 12 and to be written in the video RAM 16. At the same time, the write data timing signal is also applied to bidirectional transfer buffers 37 via an inverter 35. Thus, the buffers 37 close to interrupt data outputted from the CPU 10.

The timing generator 36 is constituted by a combined logic element and produces the above read data timing signal and write data timing signal in response to output from a counter 38. The counter 38 counts clocks applied from a clock output terminal E of the CPU 10. The counting operation of the counter 38 starts when a count enable signal is applied from a D flip-flip 40. The D flip-flop 40 receives coincidence output from a comparator 42 as a clock and receives Q output from a D flip-flop 44 as input data. The D flip-flop 44 responds to the clock from the CPU 10. To a clear input terminal of the D flip-flop 44, a last instruction cycle (LIC) signal produced every time the last instruction appears is applied from the CPU 10. Thus, the D flip-flop 44 is cleared and the Q output thereof changes to the L (low) level from the H (high) level when the LIC signal is generated.

The comparator 42 monitors whether a predetermined instruction code which is set in a reference code setting circuit 46 appears on the data bus 12. When it appears, the aforementioned coincidence output is fed to the D flip-flop 40. The predetermined instruction code is one of a plurality of instruction codes which requires the CPU 10 to read data from the video RAM 16 or to write data in the video RAM 16. These instruction codes are stored in a program memory 47 which also stores programs for the CPU 10. In the embodiment of Fig. 1, the above instruction code is selected to be an arithmetic shift left (ASL) code which instructs to shift the data toward the left side by one bit. If the ASL code is, for example, ASL $50FF, it means to execute the arithmetic shift left operation with respect to data in an address of $50FF. The comparator 42 is enabled to operate when the Q output from D flip-flop 48 is applied to the enable input terminal of the comparator 42. The D flip-flop 48 produces an H level Q output when a predetermined address is decoded by a decoder 50. The decoder 50 and the D flip-flop 48 are provided in order to inhibit the comparator 42 from operating when false data having the same content as the ASL code appears and when only an original ASL instruction should be executed by the data processing system.

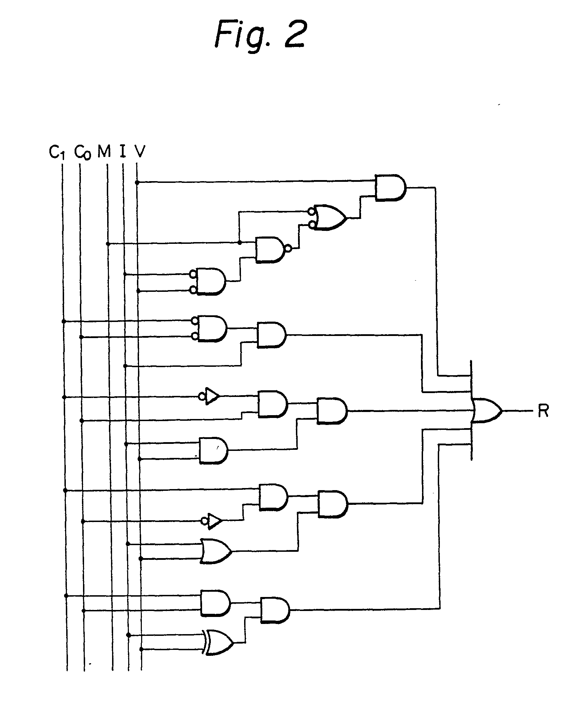

Figure 2 illustrates an example of the logic operation circuit 24 in Fig. 1. In Fig. 2, only a part of the logic operation circuit, which processes one-bit data is illustrated. Eight of such circuits are necessary to process eight-bit data. According to the circuit of Fig. 2, one of four arithmetic operations is executed in accordance with the two-bit selection data $C_0$ and $C_1$ from the selection register 26. The relation between the selection data $C_0$ and $C_1$ and the arithmetic operation is as shown in Table 1.

TABLE 1

| $C_1$ | $C_0$ | Arithmetic operation |
|---|---|---|
| 0 | 0 | PSET |
| 0 | 1 | AND |
| 1 | 0 | OR |
| 1 | 1 | EOR |

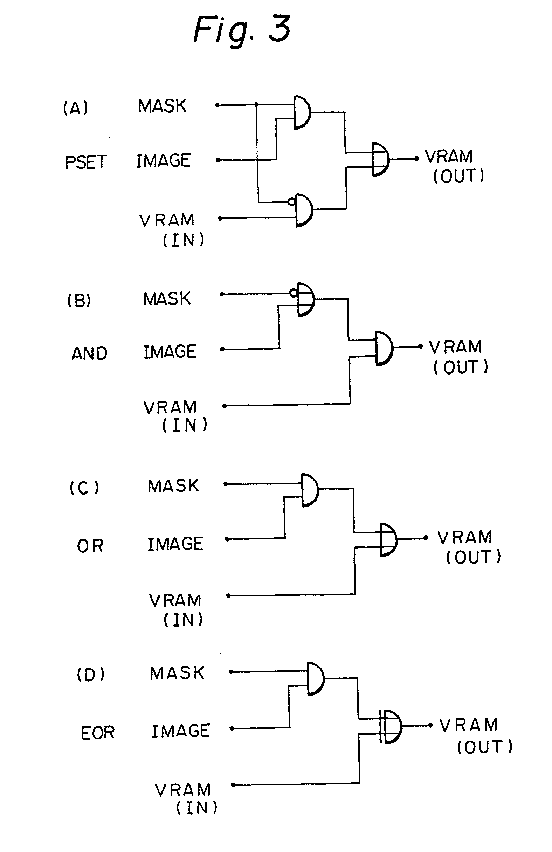

In Table 1, PSET indicates a point set-operation for setting a point to one position. In fact, the image data I appears without change at the output R of the logic operation circuit when a mask operation is not executed, that is, when the mask DATA M is "0". Figure 3(A) illustrates a logical constitution of the PSET operation, and Table 2 indicates a truth table of the PSET operation.

Also, AND indicates a logical product operation. According to this operation, a logical product of the image data I and the video RAM data V appears at the output R when the mask operation is not executed, that is, when the mask data M is "0". Figure 3(B) illustrates a logical constitution of the AND operation, and Table 3 indicates a truth table of the AND operation.

Further, OR indicates a logical add operation whereby a logical add of the image data I and the video RAM data V appears at the output R when the mask operation is not carried out, that is; when the mask data M is "0". Figure 3(C) and Table 4 correspond to this operation.

EOR indicates an exclusive OR operation, whereby an exclusive OR of the image data I and the video RAM data V appears at the output R when the mask data is "0". Figure 3(D) and Table 5 correspond to this operation.

TABLE 2

PSET

| M | I | V | R |
|---|---|---|---|
| 0 | 0 | 0 | 0 |
| 0 | 0 | 1 | 1 |
| 0 | 1 | 0 | 0 |
| 0 | 1 | 1 | 1 |
| 1 | 0 | 0 | 0 |
| 1 | 0 | 1 | 0 |
| 1 | 1 | 0 | 1 |
| 1 | 1 | 1 | 1 |

TABLE 3

AND

| M | I | V | R |
|---|---|---|---|
| 0 | 0 | 0 | 0 |
| 0 | 0 | 1 | 1 |
| 0 | 1 | 0 | 0 |
| 0 | 1 | 1 | 1 |
| 1 | 0 | 0 | 0 |
| 1 | 0 | 1 | 0 |
| 1 | 1 | 0 | 0 |
| 1 | 1 | 1 | 1 |

TABLE 4

OR

| M | I | V | R |
|---|---|---|---|
| 0 | 0 | 0 | 0 |
| 0 | 0 | 1 | 1 |
| 0 | 1 | 0 | 0 |
| 0 | 1 | 1 | 1 |
| 1 | 0 | 0 | 0 |
| 1 | 0 | 1 | 1 |
| 1 | 1 | 0 | 1 |
| 1 | 1 | 1 | 1 |

TABLE 5

EOR

| M | I | V | R |
|---|---|---|---|
| 0 | 0 | 0 | 0 |
| 0 | 0 | 1 | 1 |
| 0 | 1 | 0 | 0 |
| 0 | 1 | 1 | 1 |
| 1 | 0 | 0 | 0 |
| 1 | 0 | 1 | 1 |
| 1 | 1 | 0 | 1 |
| 1 | 1 | 1 | 0 |

Hereinafter the operation of the embodiment of Fig. 1 will be described.

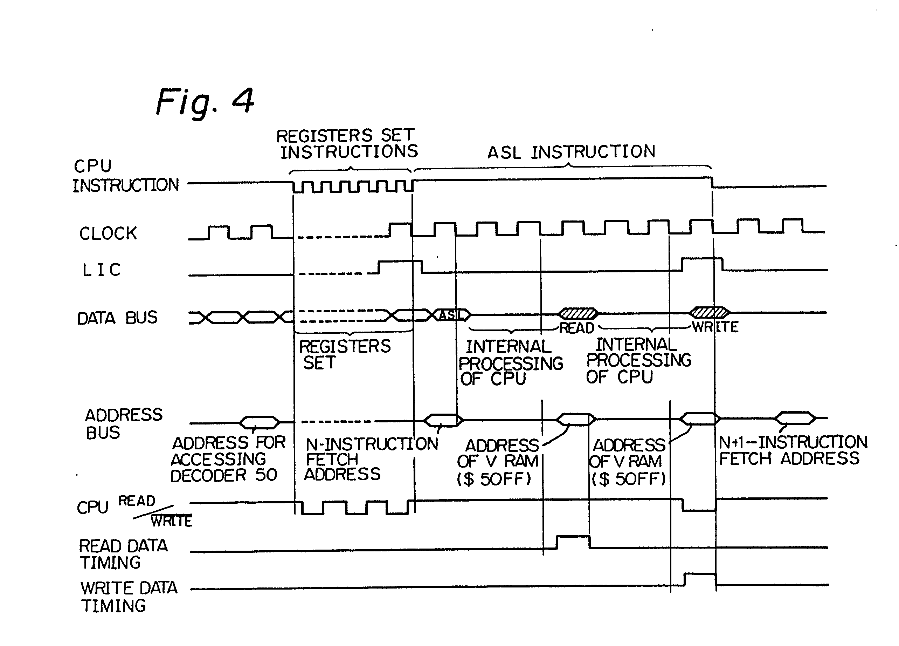

As shown in Fig. 4, when a predetermined address for accessing the decoder 50 appears on the address bus 14, the decoder 50 decodes this and thus the D flip-flop 48 is set, placing the comparator 42 in an enable condition. Accordingly, the comparator 42 starts to monitor whether the ASL instruction is fetched.

Before the ASL instruction, as shown in Fig. 4, several instructions for setting the registers are fetched. Thus, the selection register 26, mask register 28, and image register 30 receive respective data. At the last register set instruction, an LIC code is produced, causing the Q output of the D flip-flop 44 to change to the L level.

After the LIC code is produced, when the ASL code is fetched from the program memory 47, a coincidence output is applied from the comparator 42 to the D flip-flop 40, causing the Q̄ output of the D flip-flop 40 to change to the H level, whereby the counter 38 starts the counting operation. Simultaneously, the CPU 10 executes the ASL instruction. If the ASL code is, for example, "ASL$50FF" an ASL operation is executed with respect to data in the video RAM 16 at an address corresponding to the operand "$50FF" of the ASL code. In Fig. 4, "internal processing of CPU" corresponds to this operation. As shown in Fig. 4, an address of the video RAM 16 is outputted from the CPU 10. Thus, contents in the accessed address of the video RAM 16 appear on the data bus 12. At this time, the read data timing signal is fed from the timing generator 36 to the V-RAM register 34 to latch the data on the data bus 12, which data was read from the address of $50FF in the video RAM 16. Then, the arithmetic operation described before is executed in the logic operation circuit 24 and the result R is obtained. It can be known in advance when (at what clock cycles) the read address and write address are produced from the CPU 10 after the ASL code is produced. Therefore the counter 38 is constituted so that the read data timing signal and the write data timing signal are produced at the same clock cycles as those of the read address and the write address, respectively.

After several cycles, the CPU 10 again accesses the address of $50FF in the video RAM 16 so as to write the result of the original ASL instruction as shown in Fig. 4. Simultaneously, as shown in Fig. 4, the write data timing signal is fed from the timing generator 36 to the buffers 25 and 37 so as to open the buffer 25 and to close the buffer 37. Thus, the output from the logic operation circuit 24 is written in the addressed position (address of $50FF) in the video RAM 16 instead of the data from the CPU 10.

As described hereinbefore, according to prior methods, one process takes at least one instruction cycle for reading data from the video RAM, at least several instruction cycles for executing an arithmetic operation, and at least one instruction cycle for writing the result of the arithmetic operation in the video RAM. However, in an embodiment of the invention, the same process can be performed within one instruction cycle of, for example, the ASL instruction. Such an embodiment can allow production and modification of graphic data for display on a CRT at a higher speed than the prior method.

The above-mentioned high-speed processing embodying the present invention is made possible not only by the fact that the arithmetic operation is performed by a logic operation means provided separately from the CPU but also by the fact that the CPU operates and executes the ASL instruction during the arithmetic operation of the logic operation means and the operand of the ASL instruction corresponds to an address in the video RAM to be accessed. If the CPU were to stop (wait) its processing during the arithmetic operation of the logic operation means in order to open the data bus to the logic operation means, considerable hardware for stopping the operation of the CPU would become necessary. Furthermore, the CPU would have to execute additional programs for preparing the stoppage of the CPU and for returning the CPU from waiting condition to operating condition. The latter might prevent high-speed processing of the system. Since the operand of the ASL instruction is used for the address in the video RAM, the hardware and program for producing an address for accessing the video RAM can be omitted.

In the aforementioned embodiment, the arithmetic operation with respect to data in the video RAM is carried out while the CPU executes the ASL instruction. In embodiments of the present invention, however, other instructions for reading and writing data in a predetermined address in the video RAM can be used instead of the ASL instruction.

If a main progam is formed so that the operand of the ASL instruction stored in the program memory 47 is renewed, the above arithmetic operation can be executed with respect to a plurality of data in the different address. If the main program is formed so that the operand of the ASL instruction is changed to a data inputted from a keyboard, the operator can select any address in the video RAM for the arithmetic operation. Many different kinds of arithmetic operations can be of course performed without being limited to the specific arithmetic operation, in the above embodiment.

Embodiments of the invention, can in particular, be effective for a graphic display on a CRT using a personal computer of a small processing capacity, wherein a part of one graph should be superimposed upon another graph already displayed on the CRT.

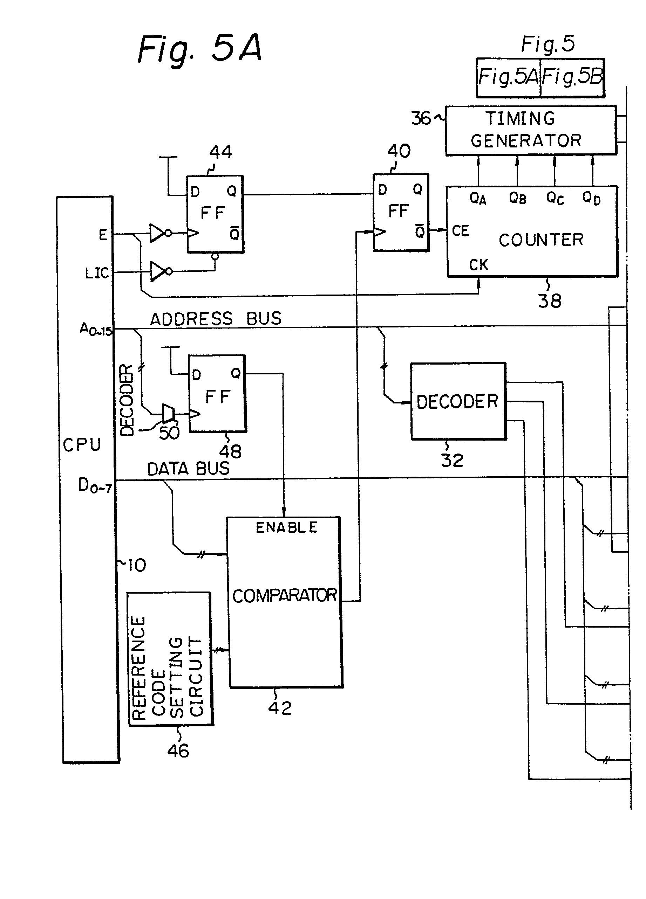

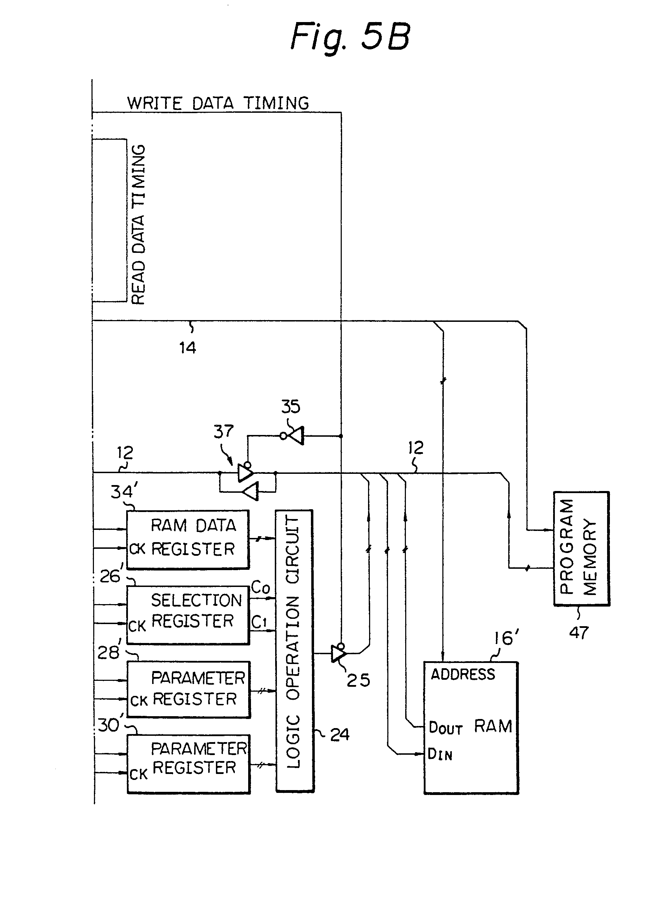

Figure 5 illustrates another embodiment of the present invention. While the embodiment of Fig. 1 relates to a graphic display system, the embodiment of Fig. 5 relates to a general purpose data processing system. Therefore, instead of the video RAM 16 in Fig. 1, a general RAM 16' is provided in this embodiment. The CRT scanning address generator 20, multiplexer 18, and CRT interface circuit 22 in Fig. 1 are omitted in this embodiment. Furthermore, instead of the V-RAM register 34, mask register 28, and image register 30, a RAM register 34' and parameter registers 28' and 30' are provided. The parameter registers 28' and 30' hold parameter data used in arithmetic operations. Otherwise, the constitution and operation of this embodiment are the same as in the embodiment of Fig. 1.

## Claims

1. Data processing apparatus comprising:
a central processing unit (10);
a data bus (12) coupled to said central processing unit;
memory means (16, 16'), coupled to said data bus, for storing data fed from said central processing unit via said data bus; said central processing unit being operable to supply an address to said memory means for use in reading data from and writing data in said memory means;
characterised by:
means (42), coupled to said data bus (12), for identifying a predetermined instruction code being one of a plurality of instruction codes requiring said central processing unit to read data from or to write data in said memory means (16, 16'); and
logic operation means (24, 26, 26', 28, 28', 30, 30', 34, 34', 37), coupled to said data bus, for receiving data from said memory means (16, 16') via said data bus (12), for executing a logic operation with respect to said received data to produce data, and for writing said produced data in said memory means, when said predetermined instruction code is identified, said logic operation means being operable to perform said receiving, executing and writing within a single instruction cycle of said central processing unit and without interrupting operation of said central processing unit.

2. Apparatus as claimed in claim 1, wherein the memory means comprise video memory means (16).

3. Apparatus as claimed in claim 1 or 2, wherein said logic operation means is operable to write said produced data in said memory means (16, 16') instead of data being written in said memory means from said central processing unit (10), when said predetermined instruction code is identified.

4. Apparatus as claimed in claim 1, 2 or 3, wherein said logic operation means includes means (37), disposed on said data bus (12), for inhibiting writing data from said central processing unit (10) from being applied to said memory means (16, 16'), when said predetermined instruction code is identified.

5. Apparatus as claimed in any preceding claim, wherein said logic operation means is operable to execute a logic operation with respect to said received data from said memory means (16, 16') and at least one item of data fed from said central processing unit (10) when said predetermined instruction code is identified.

6. Apparatus as claimed in any preceding claim, wherein said logic operation means includes means (26) for selecting one of a plurality of logic operations to be executed in accordance with a selection signal fed from the said central processing unit (10).

7. Apparatus as claimed in any preceding claim, wherein said logic operation means includes:

first register means (34, 34') for storing the received data which was read by said central processing unit (10) from said memory means (16, 16');

second register means (28, 28', 30, 30') for storing at least one item of data fed from said central processing unit; and

a logic operation circuit (24) for executing a logic operation with respect to the stored data in said first and second register means.

8. Apparatus as claimed in claim 7, wherein said logic operation means further includes a third register means (26, 26') for storing a selection signal fed from said central processing unit (10), said logic operation circuit (24) selecting one of a plurality of logic operations in accordance with said selection signal and executing the selected logic operation with respect to the stored data in said first and second register means (28, 28', 30, 30', 34, 34').

9. Apparatus as claimed in claim 7 or 8, wherein said second register means includes two registers (28, 30) for storing image data and mask data fed from said central processing unit (10), said logic operation circuit (24) being operable to execute a logic operation with respect to the data stored in said first register means (34) and the image data and mask data stored in said registers (28, 30).

10. Apparatus as claimed in any preceding claim, wherein said logic operation means includes means (36, 38) for producing a read data timing signal indicative of a time when said logic operation means receives the data from said memory means (16, 16') via said data bus (12), and a write data timing signal indicative of a time when said logic operation means writes said produced data in said memory means, within a single instruction cycle corresponding to said predetermined instruction code.

## Patentansprüche

1. Datenverarbeitungsvorrichtung mit:
einer zentralen Prozessoreinheit (10);
einem Datenbus (12), der mit der genannten zentralen Prozessoreinheit verbunden ist;
Speichereinrichtungen (16, 16'), die mit dem genannten Datenbus verbunden sind, um Daten zu speichern, welche von der zentralen Prozessoreinheit über den genannten Datenbus geliefert werden; wobei die zentrale Prozessoreinheit betreibbar ist, um eine Adresse an die genannte Speichereinrichtung zu liefern, zur Verwendung beim Lesen von Daten von und beim Schreiben von Daten in die genannte Speichereinrichtung;
gekennzeichnet durch:
Einrichtungen (42), die mit dem genannten Datenbus (12) verbunden sind, um einen vorbestimmten Befehlscode zu identifizieren, der einer einer Vielzahl von Befehlscoden ist, welche die genannte zentrale Prozessoreinheit benötigt, um Daten von der genannten Speichereinrichtung (16, 16') zu lesen oder in diese zu schreiben; und
logische Operationseinrichtungen (24, 26, 26', 28, 28', 30, 30', 34, 34', 37), die mit dem genannten Datenbus verbunden sind, um Daten von der genannten Speichereinrichtung (16, 16') über den genannten Datenbus (12) zu empfangen, zur Ausführung einer logischen Operation in Bezug auf die empfangenen Daten, um Daten zu produzieren, und zum Schreiben der genannten Daten in die genannte Speichereinrichtung, wenn der vorbestimmte Befehlscode identifiziert ist, welche logische Operationseinrichtung betreibbar ist, um den genannten Empfang, die Ausführung und das Schreiben innerhalb eines einzigen Befehlszyklus der genannten zentralen Prozessoreinheit und ohne Unterbrechung des Betriebs der zentralen Prozessoreinheit auszuführen.

2. Vorrichtung nach Anspruch 1, bei der die genannte Speichereinrichtung eine Videospeichereinrichtung (16) umfaßt.

3. Vorrichtung nach Anspruch 1 oder 2, bei der die genannte logische Operationseinrichtung betreibbar ist, um anstelle der Daten, die von der genannten zentralen Prozessoreinheit (10) in die genannte Speichereinrichtung geschrieben werden, die genannten produzierten Daten in die genannte Speichereinrichtung (16, 16') zu schreiben, wenn der genannte vorbestimmte Befehlscode identifiziert ist.

4. Vorrichtung nach Anspruch 1, 2 oder 3, bei der die logische Operationseinrichtung Einrichtungen (37) umfaßt, die auf dem genannten Datenbus (12) angeordnet sind, um zu verhindern, daß Schreibdaten von der genannten zentralen Prozessoreinheit (10) der genannten Speichereinrichtung (16, 16') zugeführt werden, wenn der genannte vorbestimmte Befehlscode identifiziert ist.

5. Vorrichtung nach einem der vorhergehenden Ansprüche, bei der die genannte logische Operationseinrichtung betreibbar ist, um eine logische Operation in Bezug auf die genannten empfangenen Daten von der genannten Speichereinrichtung (16, 16') und wenigstens einem Datenfeld, das von der zentralen Prozessoreinheit (10) zugeführt wird, durchzuführen wenn der genannte vorbestimmte Befehlscode identifiziert ist.

6. Vorrichtung nach einem der vorhergehenden Ansprüche, bei der die genannte logische Operationseinrichtung eine Einrichtung (26) zur Auswahl einer von einer Vielzahl von logischen Operationen umfaßt, die in Übereinstimmung mit einem Selektionssignal ausgeführt werden sollen, welches von der zentralen Prozessoreinheit (10) geliefert wird.

7. Vorrichtung nach einem der vorhergehenden Ansprüche, bei der die logische Operationseinrichtung umfaßt:

erste Registereinrichtungen (34, 34'), um die empfangenen Daten zu speichern, die durch die genannte zentrale Prozessoreinheit (10) von den genannten Speichereinrichtungen (16, 16') gelesen wurden,

zweite Registereinrichtungen (28, 28', 30, 30'), um wenigstens ein Datenfeld zu speichern, welches von der zentralen Prozessoreinheit geliefert wird; und

eine logische Operationsschaltung (24), um eine logische Operation in Bezug auf die in den ersten und zweiten Registereinrichtungen gespeicherten Daten auszuführen.

8. Vorrichtung nach Anspruch 7, bei der die genannte logische Operationseinrichtung ferner eine dritte Registereinrichtung (26, 26') umfaßt, um ein Auswahlsignal, welches von der zentralen Prozessoreinheit (10) geliefert wird, zu speichern, welche logische Operationsschaltung (24) eine Vielzahl von logischen Operationen in Übereinstimmung mit dem genannten Auswahlssignal auswählt und die ausgewählte logische Operation in Bezug auf die in den genannten ersten und zweiten Registereinrichtungen (28, 28', 30, 30', 34, 34') gespeicherten Daten ausführt.

9. Vorrichtung nach Anspruch 7 oder 8, bei der die genannten zweite Speichereinrichtung zwei Register (28, 30) zum Speichern von Bilddaten und Maskendaten umfaßt, welche von der zentralen Prozessoreinheit (10) geliefert werden, die genannte logische Operationsschaltung (24) betreibbar ist, um eine logische Operation in Bezug auf die in der genannten ersten Speichereinrichtung (34) gespeicherten Daten und die in den genannten Registern (28, 30) gespeicherten Bilddaten und Maskendaten auszuführen.

10. Vorrichtung nach einem der vorhergehenden Ansprüche, bei der die genannte logische Operationseinrichtung Einrichtungen (36, 38) zum Erzeugen eines Lesedaten-Zeitsignals umfaßt, welches eine Zeit anzeigt, wenn die genannte logische Operationseinrichtung die Daten von den genannten Speichern (16, 16') über den genannten Datenbus (12) empfängt, und eines Schreibdaten-Zeitsignals, welches eine Zeit anzeigt, wenn die genannte logische Operationseinrichtung die erzeugten Daten in den genannten Speicher schreibt, innerhalb eines einzigen Befehlszyklus, der dem genannten vorbestimmten Befehlscode entspricht.

## Revendications

1. Dispositif de traitement de données comprenant:

une unité centrale de traitement (10);

un bus de données (12) couplé à l'unité centrale de traitement;

un moyen à mémoire (16, 16'), couplé au bus de données, pour mémoriser des données envoyées par l'unité centrale de traitement par l'intermédiaire du bus de données; l'unité centrale de traitement pouvant être mis en fonctionnement pour fournir une addresse au moyen à mémoire pour qu'elle serve à lire des données et à écrire des données dans le moyen à mémoire;

caractérisé par:

un moyen (42), couplé au bus de données (12), pour identifier un code d'instruction prédéterminé comme l'un d'un ensemble de codes d'instruction exigeant que l'unité centrale de traitement lises des données ou écrive des données dans le moyen à mémoire (16, 16'); et

un moyen d'exécution d'opérations logiques (24, 26, 26', 28, 28', 30, 30', 34, 34', 37), couplé au bus de données, pour recevoir des données du moyen à mémoire (16, 16') par le bus de données (12), pour exécuter une opération logique sur les données reçues en vue de produire des données, et pour écrire les données produites dans le moyen à mémoire, quand le code d'instruction prédéterminé est identifié, le moyen d'exécution d'opérations logiques pouvant être mis en fonctionnement pour exécuter la réception, l'exécution et l'écriture pendant un seul cycle d'instruction de l'unité centrale de traitement et sans interrompre le fonctionnement de l'unité centrale de traitement.

2. Dispositif selon la revendication 1, dans lequel le moyen à mémoire comprend un moyen à mémoire vidéo (16).

3. Dispositif selon l'une quelconque des revendications 1 et 2, dans lequel le moyen d'exécution d'opérations logiques peut être mis en fonctionnement pour écrire les données produites dans le moyen à mémoire (16, 16') au lieu des données qui sont écrites dans le moyen à mémoire en provenance de l'unité centrale de traitement (10), quand le code d'instruction prédéterminé est identifié.

4. Dispositif selon l'une quelconque des revendications 1 à 3, dans lequel le moyen d'exécution d'opérations logiques comprend un moyen (37), disposé sur le bus de données (12), pour interdire l'écriture de données provenant de l'unité centrale de traitement (10) à appliquer au moyen à mémoire (16, 16'), quand le code d'instruction prédéterminé est identifé.

5. Dispositif selon l'une quelconque des revendications 1 à 4, dans lequel le moyen d'exécution d'opérations logique peut être mis en fonctionnement pour exécuter une opération logique sur les données reçues provenant du moyen, à mémoire (16, 16') et au moins une unité de données envoyée par l'unité centrale de traitement (10) quand le code d'instruction prédéterminé est identifié.

6. Dispositif selon l'une quelconque des revendications 1 à 5, dans lequel le moyen d'exécution d'opérations logiques comprend un moyen (26) pour sélectionner une opération d'un ensemble d'opérations logiques à exécuter selon un signal de sélection envoyé par l'unité centrale de traitement (10).

7. Dispositif selon l'une quelconque des revendications 1 à 6, dans lequel le moyen d'exécution d'opérations logiques inclut:

un premier moyen à registre (34, 34') pour mémoriser les données reçues qui ont été lues par l'unité centrale de traitement (10) dans le moyen à mémoire (16, 16');

un deuxième moyen à registres (28, 28', 30, 30') pour mémoriser au moins une unité de données envoyée par l'unité centrale de traitement; et

un circuit d'exécution d'opérations logiques (24) pour exécuter une opération logique sur les données mémorisées dans les premier et deuxième moyens à registres.

8. Dispositif selon la revendication 7, dans lequel le moyen d'exécution d'opérations logiques comprend en outre un troisième moyen à registre (26, 26') pour mémoriser un signal de sélection envoyé par l'unité centrale de traitement (10), le circuit d'exécution d'opérations logiques (24) sélectionnant une opération d'un ensemble d'opérations logiques selon le signal de sélection et exécutant l'opération logique sélectionnée sur les données mémoriées dans les premier et deuxième moyens à registres (28, 28', 30, 30', 34, 34').

9. Dispositif selon l'une quelconque des revendications 7 et 8, dans lequel le deuxième moyen à registres comprend deux registres (28, 30) pour mémoriser des données d'image et des données de masquage envoyées par l'unité centrale de traitement (10), le circuit d'exécution d'opérations logiques (24) pouvant être mis en fonctionnement pour exécuter une opération logique sur les données mémorisées dans le premier moyen à registre (34) et les données d'image et les données de masquage mémorisées dans les registres (28, 30).

10. Dispositif selon l'une quelconque des revendications 1 à 9, dans lequel le moyen d'exécution d'opérations logiques comprend un moyen (36, 38) pour produire un signal de synchronisation de données lues indiquant un temps où le moyen d'exécution d'opérations logiques reçoit les données du moyen à mémoire (16, 16') par le bus de données (12), et un signal de synchronisation de données écrites indiquant un temps où le moyen d'exécution d'opérations logiques écrit les données produites dans le moyen à mémoire, pendant un seul cycle d'instruction correspondant au code d'instruction prédéterminé.

# Fig. IA

# Fig. 1B

2

# Fig. 2

# Fig. 3

(A)

PSET

MASK

IMAGE

VRAM
(IN)

VRAM
(OUT)

(B)

AND

MASK

IMAGE

VRAM
(IN)

VRAM
(OUT)

(C)

OR

MASK

IMAGE

VRAM
(IN)

VRAM
(OUT)

(D)

EOR

MASK

IMAGE

VRAM
(IN)

VRAM
(OUT)

# Fig. 4

Timing diagram showing CPU INSTRUCTION, CLOCK, LIC, DATA BUS, ADDRESS BUS, CPU READ/WRITE, READ DATA TIMING, and WRITE DATA TIMING waveforms.

Signal labels (left):
- CPU INSTRUCTION
- CLOCK
- LIC
- DATA BUS
- ADDRESS BUS
- CPU READ/WRITE
- READ DATA TIMING
- WRITE DATA TIMING

Annotations:
- REGISTERS SET INSTRUCTIONS
- ASL INSTRUCTION
- REGISTERS SET
- INTERNAL PROCESSING OF CPU
- INTERNAL PROCESSING OF CPU
- ASL, READ, WRITE (DATA BUS)
- ADDRESS FOR ACCESSING DECODER 50
- N-INSTRUCTION FETCH ADDRESS
- ADDRESS OF V RAM ($ 50FF)
- ADDRESS OF V RAM ($ 50FF)
- N+1—INSTRUCTION FETCH ADDRESS

EP 0 108 647 B1

# Fig. 5A

# Fig. 5B

WRITE DATA TIMING

READ DATA TIMING

14

35

37

12

34'

RAM DATA
CK REGISTER

26'

SELECTION
CK REGISTER

C₀

C₁

28'

PARAMETER
CK REGISTER

30'

PARAMETER
CK REGISTER

LOGIC OPERATION CIRCUIT

24

25

12

16'

ADDRESS

Dout RAM

Din

PROGRAM MEMORY

47

7